# FASCICULE DE BREVET EUROPEEN

(11) **EP 4 133 212 B1**
(45) Date de publication et mention de la délivrance du brevet: **28.05.2025**
(21) Numéro de dépôt: 21716733.7
(22) Date de dépôt: 02.04.2021
(51) Int. Cl.: F23C 3/00, F23C 9/06, F23D 99/00, F23L 7/00, B01D 53/62, C04B 2/12, F27B 1/04

(54) **PROCÉDÉ DE CALCINATION DE CHAUX OU DOLOMIE ET FOUR DROIT ANNULAIRE MIS EN OEUVRE**
VERFAHREN ZUM KALZINIEREN VON KALK ODER DOLOMIT UND DAFÜR VERWENDETER RINGSCHACHTOFEN
METHOD FOR CALCINING LIME OR DOLOMITE AND ANNULAR SHAFT FURNACE USED

(30) Priorité: 07.04.2020 BE 202005223
(43) Date de publication de la demande: 15.02.2023
(73) Titulaire: S.A. LHOIST RECHERCHE ET DEVELOPPEMENT, 1342 Ottignies-Louvain-la-Neuve (BE)
(72) Inventeur: HABIB, Ziad, 1630 Linkebeek (BE)
(74) Mandataire: Calysta NV
(86) Numéro de dépôt international: PCT/EP2021/058805
(87) Numéro de publication internationale: WO 2021/204725

(56) Documents cités:
- EP-A1- 2 724 770
- WO-A1-2018/002151
- US-A1- 2010 077 947

## Description

La présente invention se rapporte à un procédé de calcination de chaux ou dolomie dans un four droit annulaire présentant un cylindre externe et un cylindre interne formant entre eux un espace annulaire. On connaît un procédé de ce type qui comprend
- une alimentation en matière à calciner calcaire ou dolomitique au haut de l'espace annulaire dans lequel elle descend,
- une introduction de premières fumées de combustion dans ledit espace annulaire, à un premier niveau du four,
- une introduction de secondes fumées de combustion dans ledit espace annulaire, à un second niveau du four inférieur au premier niveau susdit,
- un préchauffage et une calcination de la matière à calciner en cours de descente dans l'espace annulaire, au contact des premières fumées de combustion et de secondes fumées de combustion qui subissent un tirage vers le haut, en contre-courant de la matière à calciner, et sont évacuées au haut du four sous la forme d'un courant gazeux supérieur,
- un refroidissement de la matière calcinée par amenée d'air de refroidissement de produit au bas de l'espace annulaire,
   - une aspiration de cet air de refroidissement à l'intérieur du cylindre interne, à un troisième niveau du four inférieur au second niveau susdit, en y formant un courant gazeux inférieur contenant l'air de refroidissement de produit, et
- un déchargement de chaux ou dolomie calcinée au bas du four (voir demande de brevet internationale WO2018/002151).

Au cours de ce processus, la matière calcaire ou dolomitique de départ dégage un important volume de CO₂ pendant sa calcination en chaux ou dolomie. De plus, pour réaliser cette calcination, il faut atteindre des températures élevées et donc procéder à la combustion de combustibles, ce qui, à son tour, provoque un dégagement important de CO₂. Globalement, les procédés de calcination présentent l'inconvénient de participer activement à l'augmentation de l'effet de serre.

Ce procédé tout à fait courant présente en outre l'inconvénient de prévoir une combustion de combustible avec de l'air et le refroidissement du produit calciné par de l'air. Il en résulte un dégagement au haut du four d'un courant gazeux présentant un taux élevé d'azote diatomique, et un taux comparativement faible de CO₂ (concentration en volume de l'ordre de 25% à 35% sur gaz sec), qu'il est coûteux de capturer en raison de la forte présence de diazote provenant de l'air utilisé.

Des tentatives ont déjà été mises en œuvre pour permettre d'éviter ces inconvénients.

On connaît déjà un four de calcination où un recyclage du CO₂ est prévu (US2020/0048146). Dans ce four, le CO₂ issu de la calcination est, en partie, chauffé et recyclé dans le four pour provoquer la calcination de la matière première et, en partie, dégagé hors de l'appareil sous forme d'effluent concentré en CO₂. Le gaz recyclé doit toutefois être chauffé à la température de calcination. Pour cela la combustion d'un combustible est requise et est effectuée dans l'air en dégageant un effluent gazeux où le CO₂ se trouve sous forme diluée.

On connaît également une chaudière à lit fluidisé dans laquelle on introduit du calcaire afin de capter, par la chaux formée, le soufre provenant du combustible utilisé et d'évacuer ainsi le soufre dans les cendres sous la forme de sulfate de calcium. Après plusieurs échanges de chaleur, pour produire notamment de la vapeur, une partie des gaz de fumées est, après dépoussiérage, réchauffée par échange de chaleur avec ces mêmes gaz de fumées sortant de la chaudière et elle est ensuite mélangée à du dioxygène pour former un comburant adapté à la réalisation d'une combustion avec le combustible dans la chaudière (voir US2010/0077947).

La présente invention a pour but, à des fins d'utilisation ou de séquestration, de permettre une capture partielle ou totale du CO₂ dégagé au cours du procédé de calcination dans un four droit annulaire, non seulement lors de la calcination proprement dite, mais aussi au cours de la combustion du combustible nécessaire pour atteindre la température de calcination, et cela sans modification, ou sans modification majeure, du four droit annulaire et du procédé qui y est mis en œuvre. L'objectif principal des fours de calcination droits annulaires doit évidemment être maintenu, c'est-à-dire la production d'une matière calcinée de hautes qualité et pureté.

Pour résoudre ce problème il est prévu que le procédé indiqué plus haut comprenne
- un prélèvement d'une partie du courant gazeux supérieur, évacué du four,
- une formation d'un premier mélange comburant par mélange de cette partie de courant gazeux supérieur avec du dioxygène pur,
   - une combustion d'un combustible dans ce premier mélange comburant, pour former lesdites secondes fumées de combustion, et
   - une extraction du courant gazeux inférieur contenant l'air de refroidissement de produit hors du cylindre interne, suivie de son évacuation hors du four

Cette combustion dans du dioxygène donnant lieu aux secondes fumées de combustion a pour effet de produire dans celles-ci principalement du CO₂ à côté de quelques impuretés, présentes sous la forme de traces dans le combustible et dans la matière à calciner, et d'un peu d'oxygène non consommé par la combustion du combustible. Il en résulte évidemment une augmentation drastique de la teneur en CO₂ du courant gazeux dégagé au haut du four.

La combustion du combustible dans du dioxygène pur donnerait lieu à des températures de flamme trop élevées pour les équipements usuels du four. Aussi, il est prévu suivant l'invention de prélever une partie du courant gazeux supérieur riche en CO₂ et de le mélanger au dioxygène. Au lieu d'un comburant usuel formé du mélange O₂ + N₂ de l'air, on obtient ainsi un mélange O₂ + CO₂ à température de flamme appropriée, en produisant au haut du four un courant gazeux de plus en plus concentré en CO₂. Ce CO₂ devient ainsi utilisable ou séquestrable dans des conditions favorables, ce qui permet de diminuer radicalement la contribution à l'effet de serre du four.

Enfin, suivant ce procédé, l'air de refroidissement de produit introduit au bas du four est totalement canalisé de manière à ne pouvoir en aucune manière diluer l'effluent gazeux qui s'échappe au haut du four.

La mise en œuvre de ce procédé ne requiert pas nécessairement d'aménagement particulier du four en soi. Les seules modifications à apporter à celui-ci peuvent être simplement extérieures au four et consister à changer les circuits des fumées sortant du four, en particulier en prévoyant une sortie du courant gazeux inférieur séparée de celle du courant gazeux supérieur, ainsi qu'à prévoir au moins une source de dioxygène pur.

Par dioxygène pur (encore appelé oxygène dans la suite), il faut entendre suivant l'invention un gaz dont le taux en oxygène dépasse 50% en volume. Il sera de préférence égal ou supérieur à 95%, avantageusement de 98 à 100% en volume. La source de dioxygène pur peut, par exemple, être une unité de séparation d'air qui sépare l'air en dioxygène et diazote (encore appelé dans la suite azote) et qui travaille en parallèle au four, ou encore un réservoir de dioxygène installé à côté du four.

Par combustible, on entend, suivant l'invention, tout combustible solide, liquide ou gazeux, par exemple du gaz naturel, de l'hydrogène, du biogaz, du fioul, des huiles, du charbon ou du coke en poudre, de la biomasse solide, comme de la sciure de bois, du combustible solide de récupération, comme des plastiques, du papier, des cartons, etc.

Suivant un mode de réalisation de l'invention, ledit tirage vers le haut et ladite aspiration dans ledit cylindre interne sont réglés de manière à s'équilibrer dans l'espace annulaire de telle façon qu'une première partie des secondes fumées de combustion est amenée, par ledit tirage vers le haut de l'espace annulaire, en contre-courant de la matière à calciner, et qu'une seconde partie des secondes fumées de combustion est amenée vers le bas de l'espace annulaire, en co-courant de la matière à calciner, puis à l'intérieur du cylindre interne, par ladite aspiration de l'air de refroidissement de produit, en formant un mélange d'air de refroidissement de produit et de secondes fumées de combustion, à titre de courant gazeux inférieur susdit extrait hors du cylindre interne et évacué du four.

Conformément à ce mode de réalisation, le four n'a subi aucun aménagement intérieur, c'est-à-dire qu'il prévoit, comme dans les fours droits annulaires usuels, une zone de calcination en contre-courant de la matière à calciner et une zone de calcination en co-courant de cette dernière. Dans le courant gazeux supérieur, la concentration en CO₂ sur gaz sec est égale ou supérieure à 80% en volume sur gaz sec, en particulier supérieure à 85% en volume sur gaz sec, et de préférence supérieure à 90% ou même à 95% en volume sur gaz sec, et est donc parfaitement capturable. Dans ce mode de réalisation, le courant gazeux inférieur, formé d'un mélange d'air de refroidissement de produit et de CO₂ à plus faible concentration en CO2 (environ 40-60% sur gaz sec en volume), est évacué séparément, par exemple par une cheminée, ou reconcentré en CO2 avec un procédé adapté ou même exploité tel quel dans d'autres procédés industriels. En effet à cette concentration plus faible, qui est toutefois plus élevée que celle du courant gazeux sortant d'un four droit annulaire usuel, le courant gazeux inférieur peut être utilisé industriellement.

Suivant un autre mode de réalisation de l'invention, ledit tirage vers le haut et ladite aspiration dans ledit cylindre interne sont réglés de manière à s'équilibrer dans l'espace annulaire de telle façon que la totalité des secondes fumées de combustion introduites dans l'espace annulaire subit le tirage vers le haut susdit et est incorporée dans ledit courant gazeux supérieur, le courant gazeux inférieur extrait hors du cylindre interne et évacué du four étant formé uniquement par l'air de refroidissement de produit. Un tel procédé est rendu possible par exemple par une modification de la localisation mutuelle entre les ouïes de reprise permettant une aspiration de l'air de refroidissement de produit à l'intérieur du cylindre interne et les chambres de combustion inférieures où sont produites les fumées de combustion inférieures. Suivant ce mode de réalisation, le courant gazeux inférieur est formé uniquement d'air de refroidissement de produit, dont la température a fortement augmenté au contact de la matière calcinée dans la zone de refroidissement et tout le CO₂ produit par la calcination et par la combustion donnant lieu aux fumées de combustion inférieures est capturé dans le courant gazeux supérieur évacué hors du four, après son refroidissement au contact de la matière à calciner, pendant l'étape de préchauffage.

Suivant un mode particulier de réalisation de l'invention, en amont de ladite combustion donnant lieu aux secondes fumées de combustion, le procédé comprend un échange de chaleur entre, d'une part, ledit premier mélange comburant ou ladite partie prélevée du courant gazeux supérieur et, d'autre part, ledit courant gazeux inférieur, avant son évacuation du four. Comme on l'a indiqué ci-dessus, selon le cas, le courant gazeux inférieur est formé d'un mélange d'air de refroidissement de produit et de secondes fumées de combustion ou simplement d'air de refroidissement de produit. Ce courant gazeux inférieur a été chauffé au contact de la matière calcinée et permet avantageusement, par échange de chaleur, de réguler à la température adéquate la partie de courant gazeux supérieur qui va être ou est mélangée au dioxygène. En effet, à sa sortie du four, le courant gazeux supérieur a été largement refroidi au contact de la matière à calciner. Plus sa température est basse, plus le four est performant, car cela signifie que le préchauffage de la matière à calciner a été très efficace. Pour permettre la combustion de combustible donnant lieu aux secondes fumées de combustion, il est en effet préférable que le comburant atteigne une température appropriée. Par cette récupération de chaleur, le courant gazeux inférieur est aussi favorablement refroidi avant son évacuation que ce soit par élimination dans l'atmosphère, ou sa réutilisation à des fins diverses.

Suivant l'invention le dioxygène est mélangé à ladite partie prélevée du courant gazeux supérieur évacué hors du haut du four, en amont ou en aval dudit échange de chaleur.

Suivant un autre mode du procédé suivant la présente invention, celui-ci comprend, pour former lesdites premières fumées de combustion, une combustion d'un combustible dans un second mélange comburant de dioxyde de carbone et de dioxygène pur. Le comburant usuel à base d'air est ici aussi remplacé, au niveau des chambres de combustion où sont produites les premières fumées de combustion, par un mélange de dioxygène et d'un gaz concentré en CO₂. Le dioxygène pur peut provenir d'une unité de séparation d'air ou d'un réservoir à oxygène. Ceux-ci peuvent être les mêmes que ceux utilisés pour alimenter les chambres de combustion inférieures ou être des dispositifs différents. Le gaz concentré en CO₂, mélangé au dioxygène, peut provenir de n'importe quelle source de CO₂ extérieure au four ou propre à celui-ci. Le second mélange comburant peut aussi être un mélange gazeux O₂ + CO₂ utilisé préalablement pour refroidir l'enveloppe du cylindre interne.

Par exemple, le procédé peut comprendre
- un prélèvement d'une partie additionnelle du courant gazeux supérieur, évacué hors du four,
- un mélange de cette partie additionnelle du courant gazeux supérieur avec du dioxygène pur pour former ledit second mélange comburant, et
- une combustion d'un combustible dans ce second mélange comburant pour former lesdites premières fumées de combustion.

Dans ce cas, il n'y a plus utilisation d'air ni pour former les fumées de combustion inférieures, ni pour former les fumées de combustion supérieures. Il en résulte que le courant gazeux évacué hors du haut four est particulièrement concentré et donc parfaitement utilisable ou séquestrable.

Suivant un mode avantageux de réalisation, le procédé comprend en outre une récupération hors du four d'une fraction gazeuse formée des premières fumées de combustion et d'au moins une partie des secondes fumées de combustion tirées vers le haut du four et, en amont de ladite combustion donnant lieu aux premières fumées de combustion, un échange de chaleur entre, d'une part, cette fraction gazeuse récupérée et, d'autre part, le second mélange comburant susdit.

Suivant un mode de réalisation particulier de l'invention, le procédé comprend un refroidissement du cylindre interne par un mélange gazeux de dioxyde de carbone et de dioxygène. Après ce refroidissement, ce mélange gazeux peut servir de mélange comburant additionnel pour ladite combustion du combustible donnant lieu aux secondes fumées de combustion. Il peut aussi servir de second mélange comburant ou de mélange comburant additionnel pour ladite combustion du combustible donnant lieu aux premières fumées de combustion.

Selon le procédé suivant l'invention, le courant gazeux supérieur susdit présente une concentration en CO₂ sur gaz sec égale ou supérieure à 80% en volume, en particulier supérieure à 85% en volume, et de préférence supérieure à 90% ou même à 95% en volume sur gaz sec.

D'autres détails et particularités du procédé suivant l'invention sont indiqués dans les revendications annexées.

L'invention concerne également un four droit annulaire pour la calcination de chaux ou de dolomie.

Un four droit annulaire usuel comprend
- un cylindre externe,
- un cylindre interne formant un espace annulaire avec le cylindre externe,
- au haut du four, une entrée d'alimentation pour introduire dans l'espace annulaire une matière à calciner calcaire ou dolomitique,
- plusieurs chambres de combustion supérieures, qui sont agencées à un premier niveau du four, et dans lesquelles a lieu une combustion d'un combustible, de manière à introduire dans l'espace annulaire des premières fumées de combustion,
- plusieurs chambres de combustion inférieures, qui sont agencées à un second niveau du four inférieur audit premier niveau et dans lesquelles a lieu une combustion d'un combustible, de manière à introduire dans l'espace annulaire des secondes fumées de combustion,
- une entrée d'air de refroidissement de produit au bas de l'espace annulaire,
- une décharge pour récolter la chaux ou dolomie calcinée au bas du four,
- des moyens de tirage vers le haut qui évacuent hors du haut du four, au travers d'un conduit de sortie, un courant gazeux supérieur formé des premières fumées de combustion et de secondes fumées de combustion,
- des ouïes de reprise prévues dans le cylindre interne à un troisième niveau inférieur au second niveau susdit, et
- des moyens d'aspiration qui, par lesdites ouïes de reprise, aspirent l'air de refroidissement de produit depuis l'espace annulaire dans le cylindre interne, en y formant un courant gazeux inférieur contenant l'air de refroidissement de produit.

Comme expliqué précédemment, un tel four présente l'inconvénient de dégager dans l'atmosphère des volumes importants de gaz de fumée contenant une teneur élevée en azote et une teneur peu concentrée en CO₂.

Un four droit annulaire suivant l'invention comprend en outre
- un circuit de recirculation qui est agencé entre le conduit de sortie du courant gazeux supérieur susdit et lesdites chambres de combustion inférieures et dans lequel est prélevée une partie du courant gazeux supérieur susdit évacué au haut du four,
- une source de dioxygène pur qui communique avec le circuit de recirculation et alimente en dioxygène la partie du courant gazeux supérieur susdit passant dans le circuit de recirculation, en formant ainsi un premier mélange comburant pour ladite combustion de combustible dans lesdites chambres de combustion inférieures, et
- au moins un conduit d'extraction par lequel ledit courant gazeux inférieur contenant l'air de refroidissement de produit est extrait du cylindre interne, puis évacué du four.

Suivant une forme de réalisation de l'invention, un échangeur de chaleur est agencé dans le circuit de recirculation de manière à permettre un échange de chaleur entre, d'une part, ledit premier mélange comburant ou ladite partie prélevée du courant gazeux supérieur passant dans ce circuit de recirculation et, d'autre part, le courant gazeux inférieur extrait hors du cylindre interne par ledit conduit d'extraction.

Le courant gazeux de fumées de combustion qui sort au haut du four est refroidi au cours de l'étape de préchauffage de la matière à calciner. Par passage dans l'échangeur de chaleur précité, la partie prélevée et remise en circulation de ce courant gazeux ainsi que le dioxygène peuvent être chauffés à une température adéquate pour la combustion dans les chambres de combustion inférieures.

Suivant une forme de réalisation particulièrement avantageuse du four suivant l'invention, il comprend en outre un conduit d'alimentation en mélange comburant qui alimente les chambres de combustion supérieures et qui est raccordé à une source de dioxygène pur et à une source de CO₂ et/ou à une source d'un mélange gazeux O₂ + CO₂.

Suivant une forme particulière de réalisation de l'invention, le four comprend, comme source de CO₂, un circuit de recyclage qui est agencé entre le conduit de sortie du courant gazeux supérieur susdit et le conduit d'alimentation en mélange comburant des chambres de combustion supérieures et dans lequel passe une partie additionnelle prélevée du courant gazeux supérieur susdit.

Suivant une autre forme de réalisation, la source d'un mélange gazeux O₂ + CO₂, susdite est raccordée, par un conduit d'amenée, à un système de refroidissement du cylindre interne du four, et ensuite au conduit d'alimentation en mélange comburant.

Avantageusement, dans le four droit annulaire suivant l'invention, le conduit d'alimentation en mélange comburant est agencé de manière à alimenter non seulement les chambres de combustion supérieures, mais également les chambres de combustion inférieures.

Suivant une forme de réalisation avantageuse de l'invention, le four comporte, à son sommet, des moyens de séparation d'une fraction gazeuse formée des premières fumées de combustion et d'au moins une partie des secondes fumées de combustion tirées vers le haut du four, un conduit de récupération de cette fraction gazeuse séparée et un échangeur de chaleur monté dans le circuit de recyclage de manière à permettre un échange de chaleur entre, d'une part, la fraction gazeuse séparée passant dans le conduit de récupération et, d'autre part, le second mélange comburant.

D'autres détails et particularités de l'invention ressortiront de la description donnée ci-après, à titre illustratif, d'exemples de réalisation suivant l'invention.
La figure 1 représente une vue en section axiale d'un four de calcination droit annulaire usuel.
La figure 2 représente de manière schématique un four droit annulaire usuel semblable à celui de la figure1, de manière à illustrer de manière schématique son fonctionnement.
Les figures 3 à 5 représentent de manière schématique plusieurs formes de réalisation de four droit annulaire qui ont été aménagées suivant l'invention.

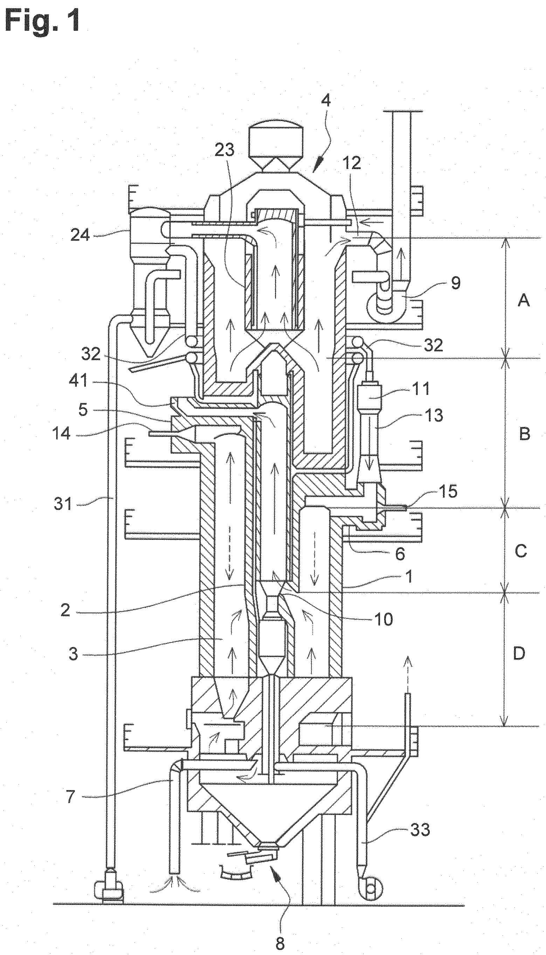

Ainsi qu'il ressort de la figure 1, qui représente un four tel que décrit et illustré dans la demande de brevet internationale WO2018/002151, un four droit annulaire usuel pour la calcination de roche calcaire ou dolomitique comprend un cylindre externe 1 et un cylindre interne 2 formant entre eux un espace annulaire 3 dans lequel descend la matière à calciner. La matière crue est introduite par le haut du four à l'entrée 4 et le produit cuit est déchargé par le bas par la décharge 8. Le combustible est injecté à deux niveaux au moyen des brûleurs de plusieurs chambres de combustion supérieures 5 et inférieures 6 (de 4 à 6 chambres selon la capacité du four). De manière générale, 1/3 du combustible est injecté dans les chambres 5 et 2/3 dans les chambres 6. La totalité des fumées des chambres supérieures 5 et une partie des fumées des chambres inférieures 6 sont tirées vers le haut par un ventilateur de tirage 9, donc à contre-courant du mouvement de la charge de matière, et évacuées par le conduit de sortie 12. Dans la zone A du four il se produit ainsi un préchauffage de la matière à calciner et dans la zone B une calcination à contre-courant. L'autre partie des gaz de fumées des chambres de combustion inférieures 6 est tirée vers le bas par une dépression créée au niveau des ouïes de reprise 10 prévues dans le cylindre interne 2, plus bas que les chambres de combustion 6. C'est la zone C de calcination en co-courant.

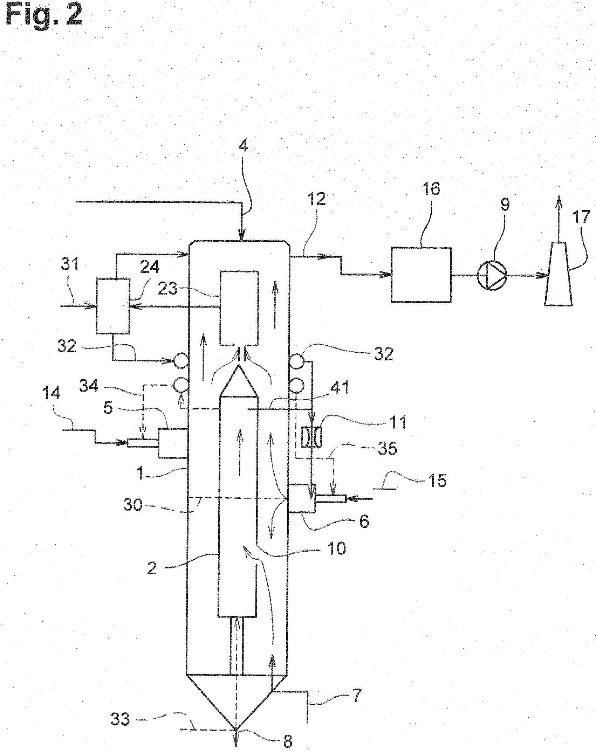

De l'air de refroidissement de produit est introduit par l'entrée 7 au bas de l'espace annulaire 3, pour refroidir la matière calcinée dans la zone D de refroidissement. Au niveau des ouïes 10 les fumées de la zone C de calcination en co-courant se mélangent alors avec l'air de refroidissement de produit introduit au bas du four en 7. Ce mélange forme un courant gazeux inférieur qui, par l'intermédiaire de plusieurs conduits de recyclage 41, est extrait hors du cylindre interne 2 par des moyens d'aspiration, tels que plusieurs éducteurs de recirculation 11 (un par chambre de combustion inférieure), et est remis en circulation dans les chambres de combustion inférieures 6 par des conduits de recirculation 13, et cela pour y servir de gaz comburant (voir aussi l'illustration schématique de cette recirculation sur la figure 2).

Ce four comporte en outre un cylindre supérieur 23 qui sert à séparer une fraction des fumées de combustion qui montent dans le four et qui dirige cette fraction gazeuse par un conduit de récupération 26 dans un récupérateur de chaleur 24. Dans celui-ci a lieu un échange de chaleur entre la fraction gazeuse récupérée et un air fourni par un conduit d'alimentation d'air moteur 31. Cet air moteur ainsi préchauffé est amené par un conduit de transfert 32 aux éducteurs de recirculation 11 pour permettre leur fonctionnement.

De l'air de refroidissement est aussi, par un conduit d'amenée 33, introduit dans un système de refroidissement du cylindre interne 2 pour refroidir celui-ci.

### Exemple 1 (selon l'art antérieur).

La figure 2 représente un four droit annulaire usuel de manière schématique.

A titre d'exemple, ce four permet une production de 170 tonnes par jour de chaux. Du calcaire est introduit dans le four par l'entrée 4 et il est calciné pour former un produit sous forme de poudre de chaux vive qui est déchargée en 8.

Le combustible introduit dans les chambres de combustion 5 et 6 peut être un combustible solide, tel que du coke et du charbon en poudre, une biomasse, ou fluide, comme du gaz naturel, de l'hydrogène, entre autres. Il est brûlé dans ces chambres en présence d'un comburant. Il est amené aux brûleurs des chambres 5 par un conduit d'alimentation de combustible14 et aux brûleurs des chambres 6 par un conduit d'amenée de combustible15.

Dans les chambres de combustion supérieures 5, le comburant est de l'air, qui, comme il est connu, contient en moyenne 79% en volume de N₂ et 21% en volume de O₂. Cet air est, dans cet exemple de réalisation, l'air de refroidissement du cylindre interne 2 fourni par le conduit d'amenée 33, chauffé lors de son parcours dans le système de refroidissement du cylindre interne 2 et recyclé sous forme d'air comburant aux brûleurs des chambres de combustion 5 et 6 par des conduits de recyclage 34 et 35 respectivement.

Le tirage vers le haut par des moyens de tirage usuels 9 entraîne vers le haut les fumées de combustion des chambres de combustion supérieures 5 et une partie des fumées de combustion des chambres de combustion inférieures 6. Par des moyens d'aspiration, tels que les éducteurs de recirculation 11, dont un seul est représenté, une autre partie des fumées de combustion des chambres de combustion inférieures 6 est aspirée vers le bas, puis entraînée à l'intérieur du cylindre interne 2 au travers des ouïes de reprise 10. L'équilibre entre le tirage vers le haut et l'aspiration vers le bas dans l'espace annulaire 3 est représenté par un trait interrompu 30. La partie descendante des fumées des chambres de combustion inférieures 6 représente typiquement 20% à 40% en volume de ces fumées.

Dans les chambres de combustion inférieures 6, le comburant est constitué du mélange des fumées de combustion tirées vers le bas et de l'air de refroidissement de produit, mélange qui est, à l'aide des éducteurs 11, extrait du cylindre interne 2 au travers des conduits de recyclage 41 et remis en circulation dans les chambres 6 par les conduits de recirculation 13. Ce mélange gazeux contient une faible concentration en CO₂ et en O₂, par exemple environ 9% en volume de CO₂ et 14% en volume de O₂, le reste comprenant du diazote et des impuretés habituelles, présentes sous forme de traces dans le combustible.

Chaque éducteur de recirculation 11 fonctionne à l'aide de l'air moteur qui est fourni par le conduit d'alimentation 31, préchauffé dans le récupérateur de chaleur 24 et ensuite amené à l'éducteur 11 par le conduit de transfert 32.

Le mélange comburant gazeux remis en circulation dans les chambres de combustion inférieures 6 présente une température approximative de 850°C, qui est adéquate pour assurer une combustion appropriée du combustible. Le débit de ce mélange comburant remis en circulation est variable et dépend du réglage du four.

Afin de maintenir des températures raisonnables, les chambres de combustion supérieures 5 fonctionnent en défaut d'air (environ 50% en volume) et les chambres de combustion inférieures 6 en excès d'air (environ 150%).

On prévoit dans cet exemple de l'air de refroidissement de produit à raison de 800 Nm³/t de chaux produite, air qui à son introduction dans le four est à la température ambiante. Le mélange gazeux, qui est remis en circulation aux éducteurs à une température d'environ 850°C, représente environ 1600 Nm³/t de chaux et le courant gazeux supérieur, qui est évacué au haut du four par le conduit de sortie 12 à une température d'environ 250°C, soumis à une filtration dans un filtre à poussières 16 et dégagé dans l'atmosphère par la cheminée 17, représente 2000 Nm³/t de chaux.

367 Nm³ de CO₂/t de chaux sont dégagés au cours de la transformation du calcaire en chaux. 215 Nm³ de CO₂/t de chaux sont produits par la combustion du combustible, à raison de 71 Nm³ dans les chambres de combustion supérieures 5 et de 144 Nm³ dans les chambres de combustion inférieures 6. Au total ce procédé produit donc 582 Nm³ de CO₂/t de chaux qui sont évacués dans le courant gazeux passant par la cheminée 17. Ce courant gazeux contient environ 30% en volume de CO₂ sur gaz sec, ce CO₂ est donc difficilement directement séquestrable ou exploitable.

### Exemple 2 (conforme à l'invention)

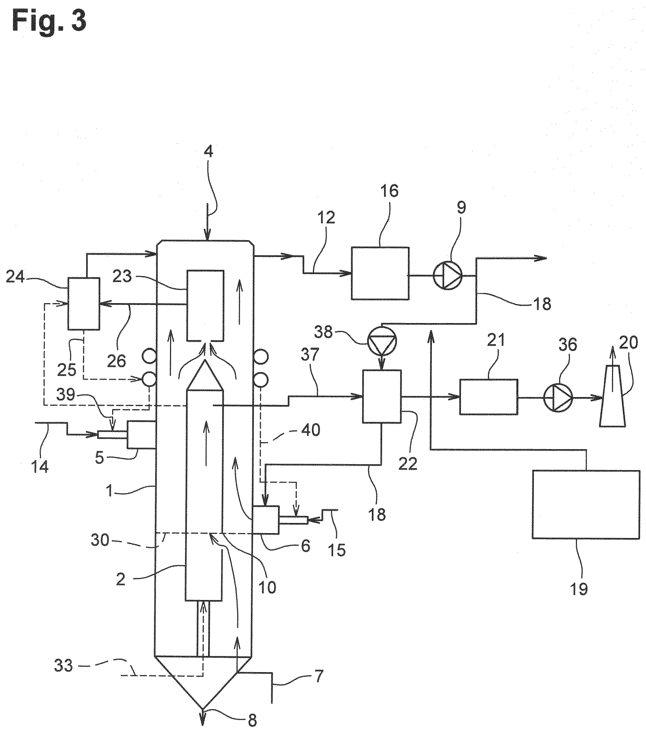

La figure 3 représente un four annulaire droit usuel, du type représenté sur la figure 2, mais aménagé suivant l'invention.

La même matière à calciner que dans l'exemple 1 est introduite dans le four. Les mêmes combustibles sont utilisés. Les chambres de combustion sont identiques. Toutefois les chambres de combustion inférieures 6 ont été abaissées à un niveau juste supérieur aux ouïes de reprise 10. Cette modification mineure dans l'intérieur du four facilite le fonctionnement de celui-ci totalement en contre-courant, avec une ligne d'équilibre 30 également abaissée. Dans ce four il n'y a plus de zone de calcination en co-courant et toutes les fumées de combustion sortant des chambres de combustion inférieures 6 sont tirées vers le haut comme celles sortant des chambres de combustion supérieures 5 pour former ensemble le courant gazeux supérieur.

Une partie du courant gazeux supérieur, évacué au haut du four par le conduit de sortie 12 à une température d'environ 250°C, est, à l'aide d'un moyen d'aspiration 38 prélevée dans un circuit de recirculation 18 qui aboutit aux chambres de combustion inférieures 6.

Dans l'exemple illustré, pour former un premier mélange comburant, cette partie de courant gazeux supérieur est mélangée à du dioxygène pur. Celui-ci provient d'une source de dioxygène, telle qu'une unité de séparation d'air 19. Ce mélange gazeux CO₂ + O₂ est un mélange massique équivalent en CO₂ recyclé et en O₂ provenant de la source de dioxygène.

Le courant gazeux inférieur, aspiré dans le cylindre interne 2, est formé du seul air de refroidissement de produit, introduit à la température ambiante par l'entrée 7, et passé dans le cylindre interne 2 au travers des ouïes de reprise 10. Cet air de refroidissement de produit est extrait du cylindre interne 2 à l'aide d'un moyen d'aspiration, tel qu'un ventilateur d'aspiration 36, à une température d'environ 850°C, puis éliminé par un conduit d'évacuation 37 vers une cheminée 20, en passant par un filtre à poussières 21. Il n'y a donc plus d'éducteurs de recirculation 11, ni besoin d'air moteur pour leur fonctionnement, ni recirculation du courant gazeux inférieur. L'air de refroidissement suit, entre son entrée et sa sortie du four, un circuit propre séparé des fumées formant le courant gazeux supérieur.

Une partie de la chaleur de ce courant gazeux inférieur est, par l'intermédiaire d'un échangeur de chaleur 22, récupérée dans le mélange CO₂ + O₂ passant dans le circuit de recirculation 18. Le courant gazeux inférieur est ensuite éliminé vers la cheminée 2 à une température de 200°C, tandis que le mélange comburant présente à la sortie de l'échangeur de chaleur une température de 650°C.

Les chambres de combustion supérieures 5 sont, dans l'exemple illustré, alimentées en un second mélange comburant semblable au premier mélange comburant susdit. Cela peut se faire par prélèvement dans le circuit de recirculation 18 ou pour plus de flexibilité par un mélange alimenté sur mesure depuis un système indépendant.

Dans l'exemple illustré sur la figure 3, un mélange gazeux CO₂ + O₂ est introduit dans le four par le conduit 33 pour refroidir le cylindre 2. Il passe ensuite dans le récupérateur de chaleur 24 avant d'être dirigé vers les brûleurs des chambres de combustion supérieures et inférieures par le conduit d'alimentation 25, puis les conduits de recyclage 39 et 40 respectivement, et servir ainsi de second mélange comburant pour les chambres de combustion supérieures 5 et de mélange comburant additionnel pour les chambres de combustion inférieures 6. Un échange de chaleur a lieu, comme dans le four usuel, avec une fraction des fumées du courant gazeux supérieur séparée par un cylindre supérieur 23.

Si le combustible alimenté aux brûleurs est un combustible solide, un mélange CO₂ + O₂ ou du CO₂ pur peut aussi être utilisé comme gaz porteur.

Il faut noter que, comme la densité du CO₂ est supérieure à celle de l'azote, l'équivalent volumique CO₂ + O₂ est inférieur au volume d'air remplacé de l'ordre de 30%. Il en résulte une diminution du même ordre du volume de CO₂ recyclé. Cela réduit la perte de charge du four (environ 20%) et compense l'augmentation de la perte de charge due au déplacement vers le bas des chambres de combustion inférieures 6 (environ 15%).

Comme pour le four de l'exemple 1 on prévoit dans le présent exemple 800 Nm³/t de chaux d'air de refroidissement de produit à l'entrée 7. Comme dans l'exemple 1 également, 367 Nm³ de CO₂/t de chaux sont dégagés au cours de la transformation du calcaire en chaux. Les mêmes quantités de combustible que dans l'exemple 1 sont appliquées aux chambres de combustion, à raison de 71 Nm³/t de chaux dans les chambres de combustion supérieures 5 et de 144 Nm³/t de chaux dans les chambres de combustion inférieures 6. Et donc le bilan total de production de CO₂ est le même que dans le four de l'exemple 1, à savoir 582 Nm³ de CO₂/t de chaux.

Toutefois, dans le présent exemple 2, l'air de refroidissement de produit introduit dans le four en 7 forme, dans sa totalité, l'effluent de la cheminée 20, sans avoir été mélangé à des fumées du processus.

D'autre part, la combustion du combustible dans les chambres de combustion supérieures ne s'effectue plus dans l'air, et la combustion dans les chambres de combustion inférieures ne s'effectue plus dans un mélange d'air et de fumées de combustion. Ces combustions s'effectuent à présent dans un mélange comburant de CO₂ + O₂. Il en résulte que, dans les fumées dégagées, le CO₂ n'est plus dilué dans un grand volume de diazote.

Dans le présent exemple, le courant gazeux supérieur, à sa sortie du haut du four, représente 1550 Nm³/t de chaux, il en est prélevé 900 Nm³/t de chaux dans le circuit de recirculation 18 et on obtient donc 650 Nm³/t de chaux d'un effluent concentré, où la teneur en CO₂ est supérieure à 85% en volume sur gaz sec.

La fraction gazeuse prélevée du courant gazeux supérieur présente donc cette même teneur en CO₂ et est mélangée à 200 Nm³ /t de chaux de dioxygène, ce qui donne, aux chambres de combustion inférieures 6, une alimentation en mélange comburant de 1100 Nm³/t de chaux.

Dans ces conditions d'effluent concentré à la sortie du haut du four, une capture à 100% du CO₂ présent devient possible pour une séquestration ou une exploitation.

### Exemple 3 (conforme à l'invention)

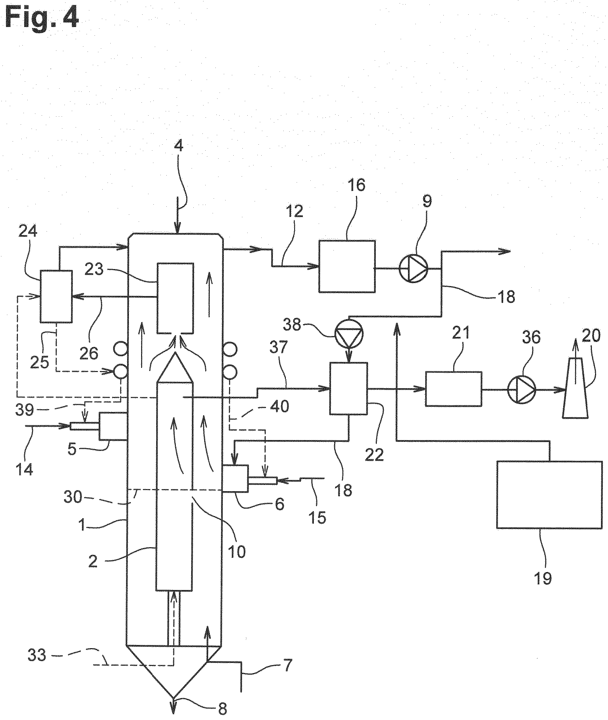

La figure 4 représente un four annulaire droit semblable à un four usuel, tel que représenté sur la figure 2, et aménagé comme dans l'exemple 2.

Toutefois, dans cet exemple 3, au lieu de déplacer les chambres de combustion inférieures 6 vers le bas, on a relocalisé les ouïes de reprise 10 vers le haut, juste en dessous du niveau de ces chambres. Cette adaptation du four usuel est plus simple et donc moins coûteuse.

Le reste du procédé est inchangé par rapport au four de l'exemple 2. Il n'y a plus de zone de calcination en co-courant, celle-ci devient dans ce four une zone de refroidissement. Comme dans le four de l'exemple 2, la combustion du combustible s'effectue en présence de premier et second mélanges comburants CO₂ + O₂, et l'effluent obtenu au haut du four est très concentré en CO₂, à une valeur supérieure à 85% en volume sur gaz sec.

### Exemple 4 (conforme à l'invention)

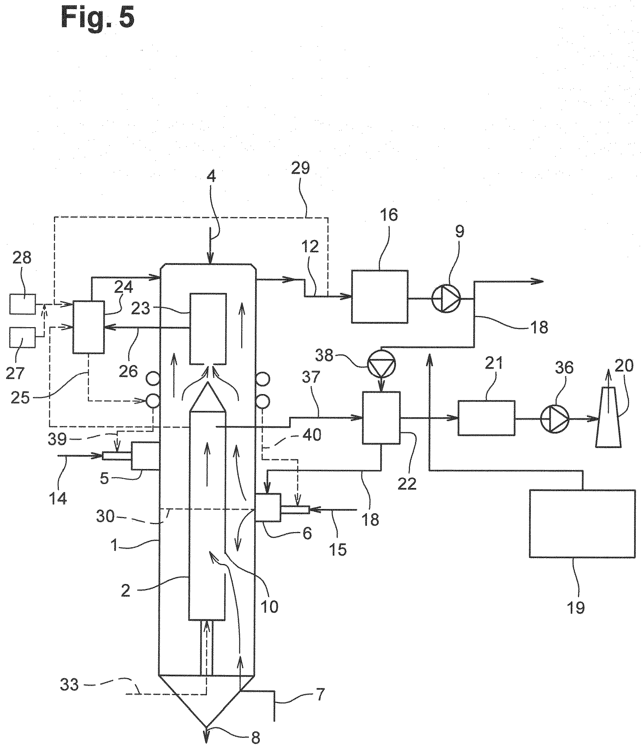

La figure 5 représente un four annulaire droit semblable à un four usuel, tel que représenté sur la figure 2. Ici, seul l'agencement des éléments externes au four est modifié conformément à ce qui a été prévu dans les fours suivant l'invention des exemples 2 et 3. Par contre, le four en soi n'est pas modifié, les chambres de combustion inférieures 6 et les ouïes de reprise 10 ne sont pas relocalisées et il subsiste ici une zone de calcination en co-courant.

Par conséquent, une partie des fumées de combustion provenant des chambres de combustion inférieures 6 est mélangée avec l'air de refroidissement de produit introduit dans le four à l'entrée 7. Ce mélange gazeux extrait du cylindre interne 2 et évacué par la cheminée 20 est donc un effluent dilué, car en plus d'une partie du CO₂ de combustion et d'une partie du CO₂ de calcination, il contient tout l'air de refroidissement de la chaux. Toutefois, grâce à cette canalisation de l'air de refroidissement, celui-ci ne peut plus en aucune façon diluer l'effluent gazeux sortant au haut du four. La teneur en CO₂ du courant gazeux inférieur reste toutefois plus élevée que dans les effluents sortant au haut des fours droits annulaires traditionnels, environ 40-60% sur gaz sec au lieu de 30%, mais elle est inférieure à celle obtenue dans le courant gazeux évacué au haut du four. Celui-ci n'est en effet pas dilué dans de l'air et contient une teneur en CO₂ supérieure à 85% sur gaz sec.

Dans cet exemple de réalisation on a également représenté en traits interrompus des variantes pour l'alimentation en CO₂ et en O₂ du conduit d'alimentation en mélange comburant 25. Le dioxygène peut provenir d'une unité de séparation d'air 28, de l'unité de séparation d'air 19 ou encore de tout autre source de O₂. Le CO₂ peut provenir d'une source de CO₂ indépendante 27. Il peut aussi provenir du courant gazeux supérieur passant dans le conduit de sortie 12 dont une partie additionnelle est prélevée dans un circuit de recyclage 29. Ici, on peut aussi prévoir, comme dans les exemples 2 et 3, un mélange gazeux CO_{2 +} O₂ pour refroidir le cylindre interne, alimenter le conduit 25, puis les chambres de combustion 5 et 6.

Il doit être entendu que la présente invention n'est en aucune façon limitée aux formes de réalisation décrites ci-dessus et que bien des modifications peuvent y être apportées sans sortir du cadre des revendications annexées.

Dans toutes les formes de réalisation, aussi bien celle de l'exemple 1 de l'art antérieur, que des exemples 2 à 4 suivant l'invention, on peut envisager une variante où le cylindre supérieur 23 est absent, ce qui empêche une récupération de chaleur dans un récupérateur 24.

Suivant, l'invention, on peut aussi prévoir que l'apport de dioxygène dans le circuit de recirculation 18 ait lieu en aval de l'échangeur de chaleur 22.

De même, suivant l'invention, on peut prévoir d'agencer le moyen d'aspiration 38, qui sert à prélever une partie du courant gazeux supérieur dans le circuit de recirculation 18, dans la section de ce circuit qui se trouve en aval de l'échangeur de chaleur 22 et en amont des chambres de combustion inférieures 6.

## Revendications

1. Procédé de calcination de chaux ou dolomie dans un four droit annulaire présentant un cylindre externe et un cylindre interne formant entre eux un espace annulaire, comprenant
- une alimentation en matière à calciner calcaire ou dolomitique au haut de l'espace annulaire dans lequel elle descend,
- une introduction de premières fumées de combustion dans ledit espace annulaire, à un premier niveau du four,
- une introduction de secondes fumées de combustion dans ledit espace annulaire, à un second niveau du four inférieur au premier niveau susdit,
- un préchauffage et une calcination de la matière à calciner en cours de descente dans l'espace annulaire, au contact des premières fumées de combustion et de secondes fumées de combustion qui subissent un tirage vers le haut, en contre-courant de la matière à calciner, et sont évacuées au haut du four sous la forme d'un courant gazeux supérieur
- un refroidissement de la matière calcinée par amenée d'air de refroidissement de produit au bas de l'espace annulaire,
- une aspiration de cet air de refroidissement de produit à l'intérieur du cylindre interne, à un troisième niveau du four inférieur au second niveau susdit, en y formant un courant gazeux inférieur contenant l'air de refroidissement de produit,
et
- un déchargement de chaux ou dolomie calcinée au bas du four,
**caractérisé en ce qu'**il comprend
- un prélèvement d'une partie du courant gazeux supérieur, évacué du four,
- une formation d'un premier mélange comburant par mélange de cette partie prélevée de courant gazeux supérieur avec du dioxygène pur,
- une combustion d'un combustible dans ce premier mélange comburant, pour former lesdites secondes fumées de combustion, et
- une extraction du courant gazeux inférieur contenant l'air de refroidissement de produit hors du cylindre interne, suivie de son évacuation hors du four.

2. Procédé suivant la revendication 1, **caractérisé en ce que** ledit tirage vers le haut et ladite aspiration dans ledit cylindre interne sont réglés de manière à s'équilibrer dans l'espace annulaire de telle façon qu'une première partie des secondes fumées de combustion est amenée, par ledit tirage vers le haut de l'espace annulaire, en contre-courant de la matière à calciner, et qu'une seconde partie des secondes fumées de combustion est amenée vers le bas de l'espace annulaire, en co-courant de la matière à calciner, puis à l'intérieur du cylindre interne, par ladite aspiration de l'air de refroidissement de produit, en formant un mélange d'air de refroidissement de produit et de secondes fumées de combustion, à titre de courant gazeux inférieur susdit extrait hors du cylindre interne et évacué du four.

3. Procédé suivant la revendication 1, **caractérisé en ce que** ledit tirage vers le haut et ladite aspiration dans ledit cylindre interne sont réglés de manière à s'équilibrer dans l'espace annulaire de telle façon que la totalité des secondes fumées de combustion introduites dans l'espace annulaire subit le tirage vers le haut susdit et est incorporée dans ledit courant gazeux supérieur, le courant gazeux inférieur extrait hors du cylindre interne et évacué du four étant formé uniquement d'air de refroidissement de produit.

4. Procédé suivant la revendication 2, **caractérisé en ce que**, en amont de ladite combustion donnant lieu aux secondes fumées de combustion, il comprend un échange de chaleur entre, d'une part, ledit premier mélange comburant ou ladite partie prélevée du courant gazeux supérieur et, d'autre part, ledit courant gazeux inférieur formé du mélange d'air de refroidissement de produit et de secondes fumées de combustion, avant son évacuation du four.

5. Procédé suivant la revendication 3, **caractérisé en ce que**, en amont de ladite combustion donnant lieu aux secondes fumées de combustion, il comprend un échange de chaleur entre, d'une part, ledit premier mélange comburant ou ladite partie prélevée du courant gazeux supérieur et, d'autre part, l'air de refroidissement de produit formant ledit courant gazeux inférieur, avant son évacuation du four.

6. Procédé suivant l'une des revendications 1 à 5, **caractérisé en ce que** le courant gazeux supérieur et le courant gazeux inférieur contenant l'air de refroidissement sont soumis à une filtration.

7. Procédé suivant l'une quelconque des revendications 1 à 6, **caractérisé en ce qu'**il comprend, pour former lesdites premières fumées de combustion, une combustion d'un combustible dans un second mélange comburant de dioxyde de carbone et de dioxygène pur.

8. Procédé suivant la revendication 7, **caractérisé en ce qu'**il comprend
- un prélèvement d'une partie additionnelle du courant gazeux supérieur, évacué hors du four,
- un mélange de cette partie additionnelle du courant gazeux supérieur avec du dioxygène pur pour former ledit second mélange comburant, et
- une combustion d'un combustible dans ce second mélange comburant pour former lesdites premières fumées de combustion.

9. Procédé suivant l'une des revendications 7 et 8, **caractérisé en ce qu'**il comprend en outre une récupération hors du four d'une fraction gazeuse formée des premières fumées de combustion et d'au moins une partie des secondes fumées de combustion tirées vers le haut du four et, en amont de ladite combustion donnant lieu aux premières fumées de combustion, un échange de chaleur entre, d'une part, cette fraction gazeuse récupérée et, d'autre part, le second mélange comburant susdit.

10. Procédé suivant l'une quelconque des revendications 1 à 6, **caractérisé en ce qu'**il comprend un refroidissement du cylindre interne par un mélange gazeux de dioxyde de carbone et de dioxygène pur qui, après ce refroidissement, sert de mélange comburant additionnel pour ladite combustion du combustible donnant lieu aux secondes fumées de combustion.

11. Procédé suivant l'une quelconque des revendications 7 à 10, **caractérisé en ce qu'**il comprend un refroidissement du cylindre interne par un mélange gazeux de dioxyde de carbone et de dioxygène pur qui, après ce refroidissement, sert de second mélange comburant ou de mélange comburant additionnel pour ladite combustion du combustible donnant lieu aux premières fumées de combustion.

12. Procédé suivant l'une quelconque des revendications précédentes, **caractérisé en ce que** le courant gazeux supérieur susdit présente une concentration en CO₂ sur gaz sec égale ou supérieure à 80% en volume, en particulier à 85% en volume, avantageusement à 90% en volume, de préférence à 95% en volume.

13. Procédé suivant l'une des revendications 2 et 4, **caractérisé en ce que** le courant gazeux inférieur susdit présente une concentration en CO₂ sur gaz sec égale ou supérieure à 40% en volume.

14. Four droit annulaire pour la calcination de chaux ou de dolomie, comprenant
- un cylindre externe (1),
- un cylindre interne (2) formant un espace annulaire (3) avec le cylindre externe,
- au haut du four, une entrée d'alimentation (4) pour introduire dans l'espace annulaire une matière à calciner calcaire ou dolomitique,
- plusieurs chambres de combustion supérieures (5), qui sont agencées à un premier niveau du four, et dans lesquelles a lieu une combustion d'un combustible de manière à introduire dans l'espace annulaire des premières fumées de combustion,
- plusieurs chambres de combustion inférieures (6), qui sont agencées à un second niveau du four inférieur audit premier niveau et dans lesquelles a lieu une combustion d'un combustible, de manière à introduire dans l'espace annulaire des secondes fumées de combustion,
- une entrée d'air de refroidissement de produit (7) au bas de l'espace annulaire,
- une décharge (8) pour récolter la chaux ou dolomie calcinée au bas du four,
- des moyens de tirage vers le haut (9) qui évacuent hors du haut du four, au travers d'un conduit de sortie(12), un courant gazeux supérieur formé des premières fumées de combustion et de secondes fumées de combustion,
- des ouïes de reprise (10) prévues dans le cylindre interne (2) à un troisième niveau inférieur au second niveau susdit, et
- des moyens d'aspiration qui, par lesdites ouïes de reprise (10), aspirent l'air de refroidissement depuis l'espace annulaire dans le cylindre interne (2) en y formant un courant gazeux inférieur contenant l'air de refroidissement de produit,
**caractérisé en ce qu'**il comprend en outre
- un circuit de recirculation (18) qui est agencé entre le conduit de sortie (12) du courant gazeux supérieur susdit et lesdites chambres de combustion inférieures (6) et dans lequel est prélevée une partie du courant gazeux supérieur susdit évacué au haut du four,
- une source de dioxygène pur (19) qui communique avec le circuit de recirculation et alimente en dioxygène la partie du courant gazeux supérieur susdit passant dans le circuit de recirculation (18), en formant ainsi un premier mélange comburant pour ladite combustion de combustible dans lesdites chambres de combustion inférieures (6), et
- au moins un conduit d'extraction (37) par lequel ledit courant gazeux inférieur contenant l'air de refroidissement de produit est extrait du cylindre interne (2), puis évacué du four.

15. Four droit annulaire suivant la revendication 14, **caractérisé en ce qu'**un échangeur de chaleur (22) est agencé dans le circuit de recirculation (18) de manière à permettre un échange de chaleur entre, d'une part, ledit premier mélange comburant passant dans ce circuit de recirculation (18) ou ladite partie prélevée du courant gazeux supérieur et, d'autre part, le courant gazeux inférieur extrait hors du cylindre interne (2) par ledit conduit d'extraction (37).

16. Four droit annulaire suivant l'une des revendication 14 et 15, **caractérisé en ce qu'**il comprend en outre un conduit d'alimentation en mélange comburant (25) qui alimente les chambres de combustion supérieures (5) et qui est raccordé à une source de dioxygène pur (27) et à une source de CO₂ (28, 29) et/ou à une source d'un mélange gazeux O₂ + CO₂.

17. Four droit annulaire suivant la revendication 16, **caractérisé en ce qu'**il comprend, comme source de CO₂, un circuit de recyclage (29) qui est agencé entre le conduit de sortie (12) du courant gazeux supérieur susdit et le conduit d'alimentation en mélange comburant (25) des chambres de combustion supérieures (5) et dans lequel passe une partie additionnelle prélevée du courant gazeux supérieur susdit.

18. Four droit annulaire suivant la revendication 16, **caractérisé en ce que** la source d'un mélange gazeux O₂ + CO₂, susdite est raccordée, par un conduit d'amenée (33), à un système de refroidissement du cylindre interne (2) du four, et ensuite au conduit d'alimentation en mélange comburant (25).

19. Four droit annulaire suivant l'une des revendications 16 à 18, **caractérisé en ce que** le conduit d'alimentation en mélange comburant (25) est agencé de manière à alimenter également les chambres de combustion inférieures (6).

20. Four droit annulaire suivant l'une des revendications 16 à 19, **caractérisé en ce qu'**il comporte au sommet du four des moyens de séparation (23) d'une fraction gazeuse formée des premières fumées de combustion et d'au moins une partie des secondes fumées de combustion tirées vers le haut du four, un conduit de récupération (26) de cette fraction gazeuse séparée et un échangeur de chaleur (24) monté dans ce conduit de récupération de manière à permettre un échange de chaleur entre, d'une part, la fraction gazeuse séparée passant dans le conduit de récupération (26) et, d'autre part, le mélange gazeux comburant passant par le conduit d'alimentation en mélange comburant (25).

## Patentansprüche

1. Kalk- oder Dolomit-Kalzinierungsverfahren in einem ringförmigen Schachtofen, der einen äußeren Zylinder und einen inneren Zylinder aufweist, die dazwischen einen ringförmigen Raum bilden, umfassend
- ein Zuführen von zu kalzinierendem kalkhaltigem oder dolomitischem Material an der Oberseite des ringförmigen Raums, in dem es nach unten sinkt,
- ein Einleiten von ersten Verbrennungsabgasen in den genannten ringförmigen Raum auf einer ersten Ebene des Ofens,
- ein Einleiten von zweiten Verbrennungsabgasen in den genannten ringförmigen Raum auf einer zweiten Ebene des Ofens, die niedriger ist als die oben genannte erste Ebene,
- ein Vorwärmen und ein Kalzinieren des zu kalzinierenden Materials, das in dem ringförmigen Raum nach unten sinkt, in Kontakt mit ersten Verbrennungsabgasen und zweiten Verbrennungsabgasen, die im Gegenstrom zu dem zu kalzinierenden Material einen Zug nach oben erfahren und an der Oberseite des Ofens in Form eines oberen Gasstroms abgeleitet werden,
- ein Abkühlen des kalzinierten Materials durch Zuführen von Produktkühlluft an der Unterseite des ringförmigen Raums,
- ein Ansaugen dieser Produktkühlluft in das Innere des inneren Zylinders auf einer dritten Ebene des Ofens, die niedriger ist als die oben genannte zweite Ebene, indem darin ein unterer Gasstrom gebildet wird, der die Produktkühlluft enthält, und
- ein Entladen von kalziniertem Kalk oder Dolomit an der Oberseite des Ofens, **dadurch gekennzeichnet, dass** es Folgendes umfasst
- ein Entnehmen eines Teils des oberen Gasstroms, der aus dem Ofen abgeleitet wird,
- ein Bilden eines ersten oxidierenden Gemischs durch Mischen dieses entnommenen Teils des oberen Gasstroms mit reinem Sauerstoff,
- ein Verbrennen eines Brennstoffs in diesem ersten Oxidationsgemisch, um die zweiten Verbrennungsabgase zu bilden, und
- ein Extrahieren des unteren Gasstroms, der die Produktkühlluft enthält, aus dem inneren Zylinder, gefolgt von seinem Ableiten aus dem Ofen.

2. Verfahren nach Anspruch 1, **dadurch gekennzeichnet, dass** der Zug nach oben und das Ansaugen in den inneren Zylinder eingestellt sind, um sich in dem ringförmigen Raum auszugleichen, sodass ein erster Teil der zweiten Verbrennungsabgase durch den Zug nach oben in dem ringförmigen Raum im Gegenstrom zu dem zu kalzinierenden Material zugeführt wird, und ein zweiter Teil der zweiten Verbrennungsabgase im Gleichstrom mit dem zu kalzinierenden Material zu dem Boden des ringförmigen Raums und dann durch das Ansaugen der Produktkühlluft in den inneren Zylinder geleitet wird, wobei ein Gemisch aus Produktkühlluft und zweiten Verbrennungsabgasen als der untere Gasstrom gebildet wird, der aus dem inneren Zylinder extrahiert und aus dem Ofen abgeleitet wird.

3. Verfahren nach Anspruch 1, **dadurch gekennzeichnet, dass** der Zug nach oben und das Ansaugen in den inneren Zylinder eingestellt sind, um sich in dem ringförmigen Raum auszugleichen, sodass der gesamte in den ringförmigen Raum eingeleitete zweite Verbrennungsabgase den oben genannten Zug nach oben erfährt und in den oberen Gasstrom integriert wird, wobei der aus dem inneren Zylinder extrahierte und aus dem Ofen abgeleitete untere Gasstrom nur aus Produktkühlungsluft besteht.

4. Verfahren nach Anspruch 2, **dadurch gekennzeichnet, dass** es stromaufwärts der Verbrennung, die zu den zweiten Verbrennungsabgasen führt, einen Wärmeaustausch zwischen dem ersten Verbrennungsgemisch oder dem entnommenen Teil des oberen Gasstroms einerseits und dem unteren Gasstrom, der aus dem Gemisch aus Produktkühlluft und zweiten Verbrennungsabgasen gebildet wird, andererseits umfasst, bevor dieser aus dem Ofen abgeleitet wird.

5. Verfahren nach Anspruch 3, **dadurch gekennzeichnet, dass** es stromaufwärts der Verbrennung, die zu den zweiten Verbrennungsabgasen führt, einen Wärmeaustausch zwischen dem ersten Verbrennungsgemisch oder dem entnommenen Teil des oberen Gasstroms einerseits und der Produktkühlluft, die den unteren Gasstrom bildet, andererseits umfasst, bevor sie aus dem Ofen abgeleitet wird.

6. Verfahren nach einem der Ansprüche 1 bis 5, **dadurch gekennzeichnet, dass** der obere Gasstrom und der untere Gasstrom, der die Kühlluft enthält, einer Filtration unterzogen werden.

7. Verfahren nach einem der Ansprüche 1 bis 6, **dadurch gekennzeichnet, dass** es zum Bilden der ersten Verbrennungsabgase eine Verbrennung eines Brennstoffs in einem zweiten verbrennungsfördernden Gemisch aus Kohlendioxid und reinem Sauerstoff umfasst.

8. Verfahren nach Anspruch 7, **dadurch gekennzeichnet, dass** es Folgendes umfasst
- ein Entnehmen eines zusätzlichen Teils des oberen Gasstroms, der aus dem Ofen abgeleitet wird,
- ein Mischen dieses zusätzlichen Teils des oberen Gasstroms mit reinem Sauerstoff, um das zweite verbrennungsfördernde Gemisch zu bilden,
- ein Verbrennen eines Brennstoffs in diesem zweiten verbrennungsfördernden Gemisch, um die ersten Verbrennungsabgase zu bilden.

9. Verfahren nach einem der Ansprüche 7 und 8, **dadurch gekennzeichnet, dass** es ferner ein Rückgewinnen einer gasförmigen Fraktion aus dem Ofen, die aus den ersten Verbrennungsabgasen und mindestens einem Teil der zweiten Verbrennungsabgase gebildet wird, die nach oben aus dem Ofen gezogen werden, und stromaufwärts von der Verbrennung, die zu den ersten Verbrennungsabgasen führt, und einen Wärmeaustausch zwischen einerseits dieser rückgewonnenen gasförmigen Fraktion und andererseits dem oben genannten zweiten verbrennungsfördernden Gemisch umfasst.

10. Verfahren nach einem der Ansprüche 1 bis 6, **dadurch gekennzeichnet, dass** es eine Kühlung des inneren Zylinders durch ein gasförmiges Gemisch aus Kohlendioxid und reinem Sauerstoff umfasst, das nach dieser Kühlung als zusätzliches verbrennungsförderndes Gemisch für die genannte Verbrennung des Brennstoffs dient, die zu den zweiten Verbrennungsabgasen führt.

11. Verfahren nach einem der Ansprüche 7 bis 10, **dadurch gekennzeichnet, dass** es eine Kühlung des inneren Zylinders durch ein gasförmiges Gemisch aus Kohlendioxid und reinem Sauerstoff umfasst, das nach dieser Kühlung als zweites oder zusätzliches verbrennungsförderndes Gemisch für die genannte Verbrennung des Brennstoffs dient, die zu den ersten Verbrennungsabgasen führt.

12. Verfahren nach einem der vorherigen Ansprüche, **dadurch gekennzeichnet, dass** der oben genannte obere Gasstrom eine CO₂-Konzentration auf Trockengas gleich wie oder größer als 80 Volumen-%, insbesondere 85 Volumen-%, vorteilhafterweise 90 Volumen- %, vorzugsweise 95 Volumen-% aufweist.

13. Verfahren nach einem der Ansprüche 2 und 4, **dadurch gekennzeichnet, dass** der oben genannte untere Gasstrom eine CO₂-Konzentration auf Trockengas gleich wie oder größer als 40 Volumen-% aufweist.

14. Ringförmiger Schachtofen zum Kalzinieren von Kalk oder Dolomit, umfassend
- einen äußeren Zylinder (1),
- einen inneren Zylinder (2), der mit dem äußeren Zylinder einen ringförmigen Raum (3) bildet,
- an der Oberseite des Ofens einen Versorgungseinlass (4), um zu kalzinierendes kalkhaltiges oder dolomitisches Kalziniermaterial in den ringförmigen Raum einzuleiten,
- mehrere obere Brennkammern (5), die auf einer ersten Ebene des Ofens angeordnet sind und in denen eine Verbrennung eines Brennstoffs erfolgt, um in den ringförmigen Raum erste Verbrennungsabgase einzuleiten,
- mehrere untere Brennkammern (6), die auf einer zweiten Ebene des Ofens unterhalb der ersten Ebene angeordnet sind und in denen eine Verbrennung eines Brennstoffs erfolgt, um in den ringförmigen Raum zweite Verbrennungsgase einzuleiten,
- einen Produktkühllufteinlass (7) an der Unterseite des ringförmigen Raums,
- einen Entladeplatz (8), um den kalzinierten Kalk oder Dolomit an der Unterseite des Ofens zu sammeln,
- Aufwärtszugeinrichtungen (9), die einen oberen Gasstrom, der aus den ersten Verbrennungsabgasen und den zweiten Verbrennungsabgasen gebildet ist, durch eine Ausgangsleitung (12) aus der Oberseite des Ofens ableiten,
- Aufnahmekiemen (10), die in dem inneren Zylinder (2) auf einer dritten Ebene unterhalb der oben genannten zweiten Ebene bereitgestellt sind, und
- Ansaugeinrichtungen, die durch die Aufnahmekiemen (10) Kühlluft aus dem ringförmigen Raum in den inneren Zylinder (2) ansaugen, indem sie darin einen unteren Gasstrom bildet, der die Produktkühlluft enthält,
**dadurch gekennzeichnet, dass** es ferner Folgendes umfasst
- einen Rezirkulationskreislauf (18), der zwischen der Ausgangsleitung (12) des oben genannten oberen Gasstroms und den unteren Verbrennungskammern (6) angeordnet ist und aus dem ein Teil des oben genannten oberen Gasstroms entnommen wird, der an der Oberseite des Ofens abgeleitet wird,
- eine Quelle für reinen Sauerstoff (19), die mit dem Rezirkulationskreislauf in Verbindung ist und dem Teil des oben genannten oberen Gasstroms, der durch den Rezirkulationskreislauf (18) strömt, Sauerstoff zuführt, wodurch ein erstes verbrennungsförderndes Gemisch für die Brennstoffverbrennung in den unteren Verbrennungskammern (6) gebildet wird, und
- mindestens eine Extraktionsleitung (37), durch die der untere Gasstrom, der die Produktkühlluft enthält, aus dem inneren Zylinder (2) extrahiert und dann aus dem Ofen abgeleitet wird.

15. Ringförmiger Schachtofen nach Anspruch 14, **dadurch gekennzeichnet, dass** ein Wärmetauscher (22) in dem Rezirkulationskreislauf (18) angeordnet ist, um einen Wärmeaustausch zwischen einerseits dem ersten verbrennungsfördernden Gemisch, das durch diesen Rezirkulationskreislauf (18) strömt, oder dem entnommenen Teil des oberen Gasstroms und andererseits dem unteren Gasstrom, der aus dem inneren Zylinder (2) durch die Entnahmeleitung (37) extrahiert wird, zu ermöglichen.

16. Ringförmiger Schachtofen nach einem der Ansprüche 14 und 15, **dadurch gekennzeichnet, dass** er ferner eine Zufuhrleitung für verbrennungsförderndes Gemisch (25) umfasst, die die oberen Brennkammern (5) versorgt und die mit einer Quelle für reinen Sauerstoff (27) und einer CO₂-Quelle (28, 29) und/oder einer Quelle für ein gasförmiges Gemisch O₂ + CO₂ verbunden ist.

17. Ringförmiger Schachtofen nach Anspruch 16, **dadurch gekennzeichnet, dass** er als CO₂-Quelle einen Rückführungskreislauf (29) umfasst, der zwischen der Ausgangsleitung (12) des oben genannten oberen Gasstroms und der Zufuhrleitung für verbrennungsförderndes Gemisch (25) zu den oberen Brennkammern (5) angeordnet ist und durch den ein zusätzlicher entnommener Teil des oben genannten oberen Gasstroms strömt.

18. Ringförmiger Schachtofen nach Anspruch 16, **dadurch gekennzeichnet, dass** die oben genannte Quelle eines gasförmiges Gemischs aus O₂ + CO₂ über eine Versorgungsleitung (33) mit einem Kühlsystem des inneren Zylinders (2) des Ofens und dann mit der Zufuhrleitung für verbrennungsförderndes Gemisch (25) verbunden ist.

19. Ringförmiger Schachtofen nach einem der Ansprüche 16 bis 18, **dadurch gekennzeichnet, dass** die Zufuhrleitung für verbrennungsförderndes Gemisch (25) angeordnet ist, um auch die unteren Brennkammern (6) zu versorgen.

20. Ringförmiger Schachtofen nach einem der Ansprüche 16 bis 19, **dadurch gekennzeichnet, dass** er an der Spitze des Ofens Abtrenneinrichtungen (23) einer gasförmigen Fraktion umfasst, die aus den ersten Verbrennungsabgasen und mindestens einem Teil der zweiten Verbrennungsabgase, die zu der Oberseite des Ofens gezogen werden, gebildet wird, eine Rückgewinnungsleitung (26) dieser abgetrennten gasförmigen Fraktion und einen Wärmetauscher (24), der in dieser Rückgewinnungsleitung montiert ist, um einen Wärmeaustausch zwischen einerseits der abgetrennten gasförmigen Fraktion, die durch die Rückgewinnungsleitung (26) strömt, und andererseits dem gasförmigen verbrennungsfördernden Gemisch, das durch die Zufuhrleitung für verbrennungsförderndes Gemisch (25) strömt, zu ermöglichen.

## Claims

1. Method of calcining lime or dolomite in a annular shaft kiln having an outer cylinder and an inner cylinder forming an annular space between them, comprising
- a supply of limestone or dolomite material to be calcined at the top of the annular space into which it descends,
- introducing first combustion fumes into said annular space, at a first level of the kiln,
- introducing second combustion fumes into said annular space, at a second level of the kiln lower than the aforementioned first level,
- preheating and calcining of the material to be calcined during descent into the annular space, by contact with the first combustion fumes and second combustion fumes which undergo an upward draught, in counter-current to the material to be calcined, and are removed at the top of the kiln in the form of an upper gas stream,
- cooling of the calcined material by supplying product cooling air at the bottom of the annular space,
- suctioning this product cooling air inside the inner cylinder, at a third level of the kiln lower than the aforementioned second level, forming therein a lower gas stream containing the product cooling air, and
- discharging calcined lime or dolomite at the bottom of the kiln,
**characterised in that** it comprises
- withdrawing a portion of the upper gas stream, discharged from the kiln,
- a formation of a first oxidising mixture by mixing this sampled portion of the upper gas stream with pure dioxygen,
- a combustion of a fuel in this first oxidising mixture, to form said second combustion fumes, and
- an extraction of the lower gas stream containing the product cooling air from the inner cylinder, followed by its removal from the kiln.

2. Method according to claim 1, **characterised in that** said upward draught and said suction in said inner cylinder are adjusted so as to be balanced in the annular space in such a way that a first portion of the second combustion fumes is brought, by said upward draught of the annular space, in counter-current to the material to be calcined, and that a second portion of the second combustion fumes is brought down from the annular space, in co-current to the material to be calcined, and then inside the inner cylinder, by said suction of the product cooling air, forming a mixture of product cooling air and second combustion fumes, as aforementioned lower gas stream extracted from the inner cylinder and discharged from the kiln.

3. Method according to claim 1, **characterised in that** said upward draught and said suction in said inner cylinder are adjusted so as to be balanced in the annular space in such a way that all of the second combustion fumes introduced into the annular space undergo the aforementioned upward draught and are incorporated into said upper gas stream, with the lower gas stream extracted from the inner cylinder and discharged from the kiln being formed solely of product cooling air.

4. Method according to claim 2, **characterised in that**, upstream of said combustion giving rise to the second combustion fumes, it comprises a heat exchange between, on the one hand, said first oxidising mixture or said portion taken from the upper gas stream and, on the other hand, said lower gas stream formed from the mixture of product cooling air and second combustion fumes, before its removal from the kiln.

5. Method according to claim 3, **characterised in that**, upstream of said combustion giving rise to the second combustion fumes, it comprises a heat exchange between, on the one hand, said first oxidising mixture or said portion taken from the upper gas stream and, on the other hand, the product cooling air forming said lower gas stream, before its removal from the kiln.

6. Method according to one of claims 1 to 5, **characterised in that** the upper gas stream and the lower gas stream containing the cooling air undergo filtration.

7. Method according to any one of claims 1 to 6, **characterised in that** it comprises, to form said first combustion fumes, a combustion of a fuel in a second oxidising mixture of carbon dioxide and pure dioxygen.

8. Method according to claim 7, **characterised in that** it comprises
- withdrawing an additional portion of the upper gas stream, removed from the kiln,
- mixing this additional portion of the upper gas stream with pure dioxygen to form said second oxidising mixture, and
- a combustion of a fuel in this second oxidising mixture to form said first combustion fumes.

9. Method according to one of claims 7 and 8, **characterised in that** it further comprises a recovery outside the kiln of a gaseous fraction formed from the first combustion fumes and at least a portion of the second combustion fumes drawn towards the top of the kiln and, upstream of said combustion giving rise to the first combustion fumes, a heat exchange between, on the one hand, this recovered gaseous fraction and, on the other hand, the second aforementioned oxidising mixture.

10. Method according to any one of claims 1 to 6, **characterised in that** it comprises cooling the inner cylinder by a gaseous mixture of carbon dioxide and pure dioxygen which, after this cooling, serves as an additional oxidising mixture for said combustion of the fuel giving rise to the second combustion fumes.

11. Method according to any one of claims 7 to 10, **characterised in that** it comprises cooling the inner cylinder by a gaseous mixture of carbon dioxide and pure dioxygen which, after this cooling, serves as a second oxidising mixture or an additional oxidising mixture for said combustion of the fuel giving rise to the first combustion fumes.

12. Method according to any one of the preceding claims, **characterised in that** the aforementioned upper gas stream has a CO₂ concentration in dry gas equal to or greater than 80% by volume, in particular 85% by volume, advantageously 90% by volume, preferably 95% by volume.

13. Method according to one of claims 2 and 4, **characterised in that** the aforementioned lower gas stream has a CO₂ concentration in dry gas equal to or greater than 40% by volume.

14. Annular shaft kiln for calcining lime or dolomite, comprising
- an outer cylinder (1),
- an inner cylinder (2) forming an annular space (3) with the outer cylinder,
- at the top of the kiln, a supply inlet (4) for introducing into the annular space a limestone or dolomite material to be calcined,
- several upper combustion chambers (5), which are arranged at a first level of the kiln, and in which a combustion of a fuel takes place so as to introduce first combustion fumes into the annular space,
- several lower combustion chambers (6), which are arranged at a second level of the kiln lower than said first level and in which a combustion of a fuel takes place, so as to introduce second combustion fumes into the annular space,
- a product cooling air inlet (7) at the bottom of the annular space,
- an unloading device (8) for collecting the calcined lime or dolomite at the bottom of the kiln,
- upward draught means (9) which discharge from the top of the kiln, through an outlet duct (12), an upper gas stream formed of the first combustion fumes and second combustion fumes,
- return vents (10) provided in the inner cylinder (2) at a third level lower than the aforementioned second level, and
- suction means which, through said return vents (10), draw the cooling air from the annular space into the inner cylinder (2) forming therein a lower gas stream containing the product cooling air, **characterised in that** it further comprises
- a recirculation circuit (18) which is arranged between the outlet duct (12) of the aforementioned upper gas stream and said lower combustion chambers (6) and from which a portion of the aforementioned upper gas stream removed at the top of the kiln is taken,
- a source of pure dioxygen (19) which communicates with the recirculation circuit and supplies dioxygen to the portion of the aforementioned upper gas stream passing through the recirculation circuit (18), thereby forming a first oxidising mixture for said fuel combustion in said lower combustion chambers (6), and
- at least one extraction duct (37) from which said lower gas stream containing product cooling air is extracted from the inner cylinder (2) and then removed from the kiln.

15. Annular shaft kiln according to claim 14, **characterised in that** a heat exchanger (22) is arranged in the recirculation circuit (18) so as to allow a heat exchange between, on the one hand, said first combustion mixture passing through this recirculation circuit (18) or said portion taken from the upper gas stream and, on the other hand, the lower gas stream extracted from the inner cylinder (2) by said extraction duct (37).

16. Annular shaft kiln according to one of claims 14 and 15, **characterised in that** it further comprises a combustion mixture supply duct (25) which supplies the upper combustion chambers (5) and which is connected to a source of pure dioxygen (27) and to a source of CO₂ (28, 29) and/or to a source of a gas mixture O₂ + CO₂.

17. Annular shaft kiln according to claim 16, **characterised in that** it comprises, as a source of CO₂, a recycling circuit (29) which is arranged between the outlet duct (12) of the aforementioned upper gas stream and the duct for supplying the combustion mixture (25) to the upper combustion chambers (5) and in which an additional portion taken from the aforementioned upper gas stream passes.

18. Annular shaft kiln according to claim 16, **characterised in that** the aforementioned source of a gas mixture O₂ + CO₂ is connected, by a supply duct (33), to a cooling system of the inner cylinder (2) of the kiln, and then to the duct for supplying the combustion mixture (25).

19. Annular shaft kiln according to one of claims 16 to 18, **characterised in that** the duct for supplying the combustion mixture (25) is arranged so as to also supply the lower combustion chambers (6).

20. Annular shaft kiln according to one of claims 16 to 19, **characterised in that** it comprises at the top of the kiln separation means (23) for a gaseous fraction formed of the first combustion fumes and at least part of the second combustion fumes drawn towards the top of the kiln, a recovery duct (26) for this separated gaseous fraction and a heat exchanger (24) mounted in this recovery duct so as to allow a heat exchange between, on the one hand, the separated gaseous fraction passing through the recovery duct (26) and, on the other hand, the oxidising gas mixture passing through the oxidising mixture supply duct (25).
